# EUROPEAN PATENT APPLICATION

(11) **EP 1 511 153 A1**
(43) Date of publication of application: **02.03.2005**
(21) Application number: 03730833.5
(22) Date of filing: 05.06.2003
(51) Int. Cl.: H02J 9/08, H02J 3/38

(54) **STABLE POWER SUPPLY SYSTEM, OPERATION METHOD THEREOF, AND STABLE POWER SUPPLY OPERATION PROGRAM**

(30) Priority: 05.06.2002 JP 2002164008
(71) Applicant: Mitsubishi Heavy Industries, Ltd., Tokyo 108-8215 (JP)
(72) Inventor: Kado, Takashi, Mitsubishi Heavy Ind. Ltd., Sagamihara-shi, Kanagawa 229-1193 (JP); Isozaki, Toshikazu, MHI Sagami Hitech Co., Ltd., Sagamihara-shi, Kanagawa 229-1193 (JP)
(74) Representative: HOFFMANN - EITLE
(86) International application number: PCT/JP2003/007122
(87) International publication number: WO 2003/105310

(57) **Abstract**

A commercial power-system and a private power-generating system are connected via a high-speed current-limiting breaker (4). The commercial power-system supplies power to each important load (6) via a first system (A). Each overlap switch (8) is provided at each interlinkage point of the first system (A) and a second system (B). Each overlap switch (8) is switched step-by-step based on output of a private power generator (2) so that the first system (A) is disconnected, therefore, the private power-generating system supplies power to the important load (6). If there is a surge in the commercial power-system, the high-speed current-limiting breaker (4) limits an over-current and interrupts power supply quickly to protect the important load (6).

## Description

### TECHNICAL FIELD

The present invention relates to a stabilized-power supply system, a method of operating the stabilized-power supply system, and a computer program. The stabilized-power supply system is used to supply power to an important load that cannot withstand a surge. The stabilized-power supply system includes a private power system and a commercial power generating system.

### BACKGROUND ART

A system having a distributed power supply source is known. In this system, a private power-generating system and a commercial power-system are interlinked in such a manner that if the private power-generating system generates a surplus power that surplus power can be sold to the commercial power-system. On the other hand, if the commercial power-system gets a surge, power may be supplied to the loads from the private power-generating system. Although the power supply of the private power-generating system is relatively stable, important loads, i.e. load that needs to be protected from being damaged due to the surge, need a more stabile power supply.

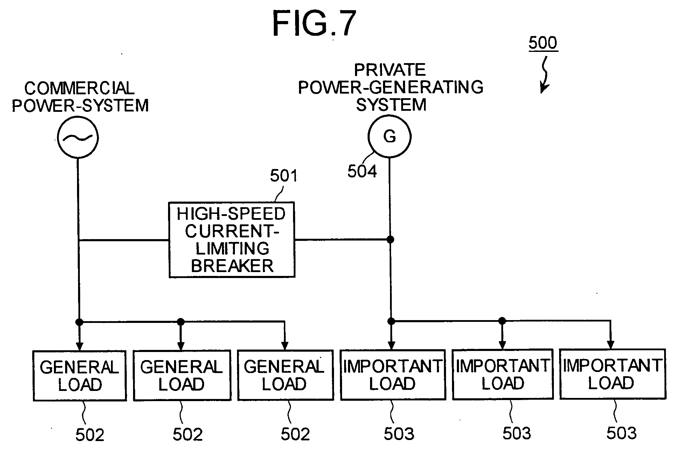

Fig. 7 is a block diagram of an example of the stabilized-power supply system. A stabilized-power supply system 500 includes a commercial power-system and a private power-generating system interlinked via a high-speed current-limiting breaker 501. The commercial power-system provides power to a plurality of general loads 502 that need not be projected from the surge. The private power-generating system provides power to a plurality of important loads 503 that need to be protected from the surge. The private power-generating system includes a private power generator 504, such as a gas turbine or a diesel engine, that generates electric power. The stabilized-power supply system 500 is just as an example and should not be taken as a prior art. In the stabilized-power supply system 500, when the private power generator 504 is not in operation, the commercial power-system supplies power to the important loads 503 via the high-speed current-limiting breaker 501.

In the stabilized-power supply system 500, the high-speed current-limiting breaker 501 that has a larger capacity than the total capacity of the important loads 503 is required. This results in increase in the size and the cost of the high-speed current-limiting breaker 501.

Another approach is to provide a high-speed current-limiting breaker corresponding to each important load 503. However, in that case, the stabilized-power supply system becomes bulky and expensive. Moreover, the power generator 504 is required to have larger capacity than the total capacity of the important loads 503, and considering to a load fluctuation caused by the surge, the power generator 504 is required to have fully larger capacity of generating power than the total capacity of the important loads 503. This results in increase in the size and the cost of the power generator 504.

It is an object of the present invention to provide a stabilized-power supply system, a method of operating the stabilized-power supply system, and a computer program to supply stabilized power at low cost.

### DISCLOSURE OF THE INVENTION

A stabilized-power supply system according to the present invention includes an interlinking system between a commercial power-system that supplies power to a general load and a private power-generating system that has a private power generator and supplies power to a plurality of important loads, an interrupting unit that interrupts power supply, a system for supplying commercial-power that supplies commercial-power to a plurality of the important loads from the commercial power-system, and an overlap switch that switches power supply to a plurality of the important loads. The commercial power-system and the private power-generating system are connected via the interrupting unit. It is preferable to use a high-speed current-limiting breaker for the interrupting unit. The overlap switch is provided at a node of the system for supplying commercial-power (first system A) and the private power-generating system (second system B).

When the overlap switch is switched from the system for supplying commercial-power to the private power-generating system, the commercial power-system and the private power-generating system are interlinked and operated to supply power via the interrupting unit. In this condition, even if the commercial power-system gets a surge, which is caused by an accident due to a lightning, power flow is controlled by the interrupting unit so that the important loads can be supplied power from the private power-generating system without being got damage. Since each overlap switch is provided for each important load, therefore, it is unnecessary to provide a plurality of the interrupting unit for each important load or a large-sized interrupting unit to supply power to all the important loads. This allows cost reduction of the whole system.

The stabilized-power supply system according to the next invention includes a controlling unit that monitors output of the private power generator, and controls switching of the overlap switches based on the output monitored.

When power supply to the important loads is switched from the commercial power-system to the private power-generating system, the overlap switch is switched step-by-step corresponding to output of the private power-generating system. Therefore, even if a capacity of the interrupting unit, which is the high-speed current-limiting breaker, is smaller than the total capacity of the important loads, it is possible to switch power supply because the controlling unit monitors and controls power flow to the interrupting unit as described later. This allows a downsized high-speed current-limiting breaker and reduces the cost thereof.

The stabilized-power supply system according to the next invention includes a controlling unit that monitors a present output of the private power generator and controls output of the private power generator in such a manner that a difference between the present output and an estimated load that is a total of loads of the important loads already connected to the private power generator and that are going to be connected to the private power generator due to switching of the overlap switches does not exceed a capacity of the interrupting unit.

If a difference between the amounts of estimated power to be supplied to the important loads and present power generated of the private power-generating system is larger than the capacity of the interrupting unit, the interrupting unit might be required to have larger capacity corresponding to the difference. However, it is possible to control power flow to the interrupting unit because the output of power generated of the private power generator is controlled. This allows a downsized interrupting unit.

The stabilized-power supply system according to the next invention includes a controlling unit that controls switching of a predetermined one or more of the overlap switches.

It is possible to select the most important load from the important loads, therefore, at least the most important load selected can be protected from a trouble, such as the surge.

In the stabilized-power supply system according to the next invention, a capacity of the interrupting unit is smaller than a total of loads of the important loads.

In this structure, it is not necessarily mean that the interrupting unit is required to have smaller capacity than the total capacity of the important loads.

In the stabilized-power supply system according to the next invention, the overlap switch includes a circuit breaker that is connected to the commercial power-system, and a circuit breaker that is connected to the private power-generating system.

The overlap switch includes at least two circuit breakers so that may be realized by a simple structure. The overlap switch makes it possible to switch power supply to the important loads without fluctuation.

The stabilized-power supply system according to the next invention includes a synchronization controlling unit that provides a synchronous control on the commercial power-system and the private power-generating system.

Since the overlap switch has the synchronous controlling unit, it is possible to switch power supply step-by-step from the private power-generating system to the commercial power-system to each important load.

A method of operating a stabilized-power supply system according to the next invention includes constructing the stabilized-power supply system that includes a commercial power-system that supplies power to a general load; a private power-supply system that has a private power generator and supplies power to a plurality of important loads; an interlinking system that has an interrupting unit and that interlinks the commercial power-supply system and the private power-generating system; a commercial power-supply system that supplies power in the commercial power-system to each of the important loads; and an overlap switch corresponding to each important load to connect either of the commercial power-supply system and the private power-generating system to a corresponding important load; supplying power from the commercial power-supply system to a desired one of the important loads by switching an overlap switch corresponding to the desired one of the important loads; and operating the private power-generating system while the commercial power-system is interlinked with the private power-generating system via the interrupting unit.

A method of operating a stabilized-power supply system according to the next invention includes constructing the stabilized-power supply system that includes a commercial power-system that supplies power to a general load; a private power-supply system that has a private power generator and supplies power to a plurality of important loads; an interlinking system that has an interrupting unit and that interlinks the commercial power-supply system and the private power-generating system; a commercial power-supply system that supplies power in the commercial power-system to each of the important loads; and an overlap switch corresponding to each important load to connect either of the commercial power-supply system and the private power-generating system to a corresponding important load; a first switching of switching, based on output of the private power generator, an overlap switch corresponding to the desired one of the important loads so that power is supplied to the desired one of the important loads from the private power-generating system; a second switching of switching, when there is an increase in the output of the private power generator, an overlap switch corresponding to an important load other that the desired one of the important loads so that power is supplied to the important load other that the desired one of the important loads from the private power-generating system; repeating the second switching based on the increase in the output of the private power generator; and operating the private power-generating system while the commercial power-system is interlinked with the private power-generating system via the interrupting unit.

A method of operating a stabilized-power supply system according to next invention includes constructing the stabilized-power supply system that includes a commercial power-system that supplies power to a general load; a private power-supply system that has a private power generator and supplies power to a plurality of important loads; an interlinking system that has an interrupting unit and that interlinks the commercial power-supply system and the private power-generating system; a commercial power-supply system that supplies power in the commercial power-system to each of the important loads; and an overlap switch corresponding to each important load to connect either of the commercial power-supply system and the private power-generating system to a corresponding important load; deciding an important load out of the important loads as a most important load; a first switching of switching, based on output of the private power generator, an overlap switch corresponding to the most important load so that power is supplied to the most important load from the private power-generating system; a second switching of switching, when there is an increase in the output of the private power generator, an overlap switch corresponding to an important load other that the most important load so that power is supplied to the important load other that the most important load from the private power-generating system; repeating the second switching based on the increase in the output of the private power generator; and operating the private power-generating system while the commercial power-system is interlinked with the private power-generating system via the interrupting unit.

In the method according to next invention the second switching is performed when a difference between a present output of the private power generator and an estimated load that is a total of loads of the important loads already connected to the private power generator and that are going to be connected to the private power generator due to switching of the overlap switches does not exceed a capacity of the interrupting unit.

The method according to the next invention includes switching the overlap switches in synchronization when shifting power supply from the private power-generating system to the commercial power-system.

A computer program for realizing a method of operating a stabilized-power supply system according to the present invention is recorded to any of one of these methods on a computer and realizes each step of these methods except the providing step.

### BRIEF DESCRIPTION OF THE DRAWINGS

Fig. 1 is a block diagram of a stabilized-power supply system according to an embodiment of the present invention;
Fig. 2 is a block diagram of an overlap switch;
Fig. 3 is a flowchart of operations performed by the stabilized-power supply system;
Fig. 4 is a flowchart of an operation for switching the power supply from a commercial power-system to a private power-generating system;
Fig. 5 is a flowchart of an operation for switching the power supply from the commercial power-system to the private power-generating system;
Fig. 6 is a flowchart of an operation for supplying power to the most important load; and
Fig. 7 is a block diagram of an example of a conventional stabilized-power supply system.

### BEST MODE FOR CARRYING OUT THE INVENTION

Exemplary embodiments of the present invention will be explained below with reference to the accompanying drawings, but the present invention is not limited by the embodiments. The components in the embodiments include ones that can be replaced easily by those skilled in the art, or substantially the same one.

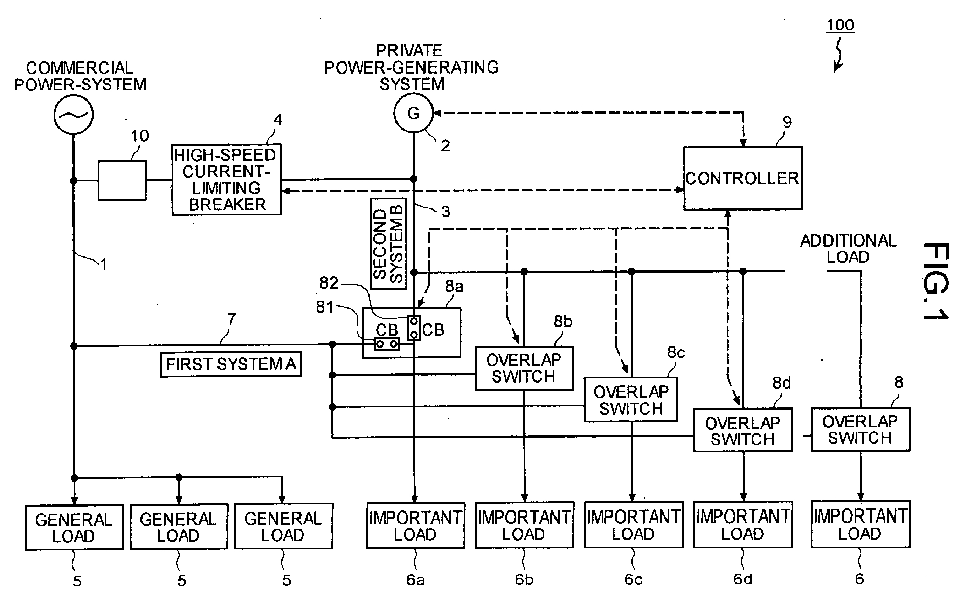

Fig.1 is a block diagram of a stabilized-power supply system according to an embodiment of the present invention. A stabilized-power supply system 100 includes a commercial power-system interlinked with a private power-generating system to supply power to a plurality of loads. This system also includes a purchased power bus 1 to supply power to the loads from an electric power company, and a private power bus 3 to supply power from a private power-generator 2. The purchased power bus 1 is connected to the private power bus 3 via a high-speed current-limiting breaker 4 and a breaker 10 for avoiding a surge. The purchased power bus 1 is connected to a plurality of general loads 5 such as a light, an air conditioner, etc. These general loads 5 can withstand the surge or a power failure and therefore need not be projected from the surge. On the other hand, the private power bus 3 is connected to a plurality of important loads 6 such as an electromagnetic circuit breaker, a semiconductor manufacturing device, etc. The important loads 6 are delicate instruments and cannot withstand the surge; therefore, they are supplied power from the private power bus 3. Accordingly, the important loads 6 are distinguished from the general loads 5 based on whether the surge causes damage on those loads.

The purchased power bus 1 is connected to a commercial power supplying wire 7 (hereinafter, "first system A"). The first system A is connected to each important load 6. The private power bus 3 (hereinafter, "second system B") is connected to the first system A at an interlinkage point, in which an overlap switch 8 is also connected. The first and the second systems are connected to the important loads 6 via the overlap switch 8. The overlap switch 8 switches the first system A to the second system B, or switches the second system B to the first system A.

The high-speed current-limiting breaker 4 has a rectifier-type hybrid bridge circuit that includes a thyristor, diode, and a reactor. For example, a CS pack, which is made by Nisshin Denki Limited, may be used for the high-speed current limiting breaker 4. A controller 9 controls the high-speed current limiting breaker 4, the overlap switch 8, and the private power-generator 2. The controller 9 may include a programmable logic controller (PLC) or a computer and predetermined software. The private power-generator 2 may be a gas turbine, a micro gas turbine, a diesel engine, a fuel cell, or combination of these.

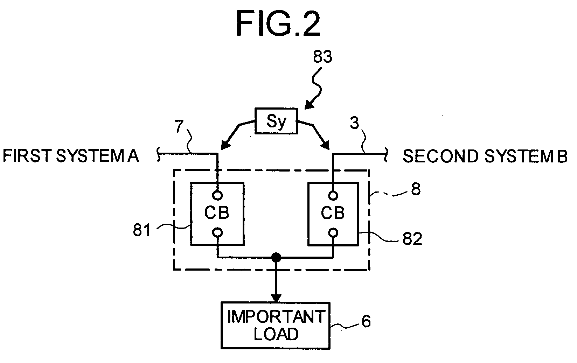

Fig. 2 is a circuit diagram of the overlap switch 8. The overlap switch 8 includes a circuit breaker 81 and a circuit breaker 82. The first system A is connected to a first terminal of the circuit breaker 81. A second terminal of the circuit breaker 81 is connected to a second terminal of the circuit breaker 82. A first terminal of the circuit breaker 82 is connected to the second system B. A node of the second terminal of the circuit breaker 81 and the second terminal of circuit breaker 82 are connected to the important load 6. The overlap switch 8 includes a synchronous controller 83 that provides a synchronous control on the first system A and the second system B. The synchronous controller 83 switches the private power-generating system to the commercial power-system to supply power to the important load.

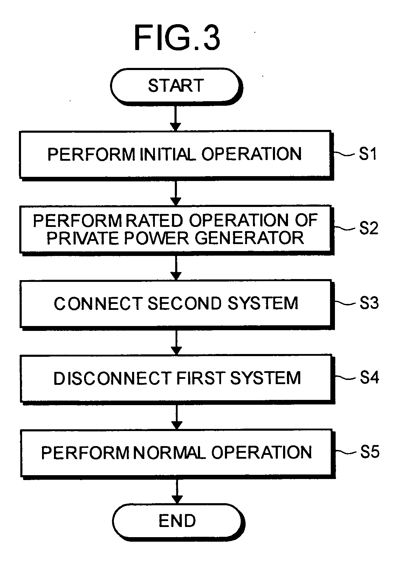

An operation of the stabilized-power supply system 100 will be explained below. Fig. 3 is a flow chart of the operation performed by the stabilized-power supply system 100. When the private power-generator 2 is not operating, or operated at an initial stage before reaching a rated operation (step S1), the overlap switch 8 connects the first system A to the important loads 6. As a result, power is supplied to the important loads 6 via the first system A from the purchased power bus 1. Moreover, the private power-generator 2 starts supplying power to the high-speed current-limiting breaker 4 and the breaker 10 via the private power bus 3, and then power is supplied to the purchased power bus 1. As a result, a synchronizing operation on the first system A and the second system B is getting ready.

After the private power-generator 2 reaches the rated operation and the synchronizing operation starts (step S2), the overlap switch 8 switches the first system A to the second system B. However, before the overlap switch 8 switches the first system A to the second system B, the second system B needs to be connected to the important load 6 via the circuit breaker 82, while the first system A is still connected to the important loads 6 via the circuit breaker 81. Namely, both the systems are connected to the important loads 6 simultaneously (step S3). In this state, the private power-generator 2 supplies power to the purchased power bus 1 via the high-speed current-limiting breaker 4 and the breaker 10, therefore, the synchronous control on the first system A and the second system B is performed. Then the first system A is disconnected from the circuit breaker 81 (step S4), in other words, only the second system B is connected to the important load 6. Thus, the overlap switch 8 supplies power to the important loads 6 without breaking the power supply.

Once the overlap switch 8 switches the first system A to the second system B, the private power-generator 2 starts the normal operation (step S5). Since the first system A is disconnected from each important load 6, only the private power-generating system supplies power to the important load 6. Even if any surge due to lightning etc. occurs in the commercial power-system, the important loads 6 can be prevented from being damaged. Because the private power-generator 2 starts supplying power to the important loads 6 before the surge occurs, and the high-speed current-limiting breaker 4 reduces a failure current quickly. The controller 9 monitors and controls the private power-generator 2 and connects each system to each important load 6.

On the other hand, when the overlap switch 8 switches the second system B to the first system A, the second system B is disconnected from the important load 6 after both systems are connected to the important loads 6 simultaneously. Such switching may take place, for example, when performing maintenance of the private power-generator 2, adding extra loads, or exchanging the loads. A capacity of the private power-generator 2 might be total amount of the important loads 6. However, if the private power-generator 2 has the least amount of power that is required in the most important load, the private power-generator 2 can supply power to the most important load. Because the overlap switch 8 is connected to the most important load, so an amount of the load required in the most important load can be decided accurately. Even if the surge occurs, the private power-generating system can supply power constantly. Accordingly, this enables lowering a cost of the private power-generator 2 while the capacity of the private power-generator 2 is kept low to supply the least power required in the most important load. The private power-generator 2 may be a diesel engine that has a low adaptability to a load fluctuation.

In the rated operation, surplus power from the private power-generator 2 is supplied to the commercial power-system via the high-speed current-limiting breaker 4. This surplus power may be sold to the electric company. Moreover, if the overlap switch 8 is connected to any loads in the system via the linkage point, the loads may be used as the important load 6. In other words, since the first system A is already provided in the system, the overlap switch 8 may be connected at the interlinkage point, and additional important loads may be easily connected to the overlap switch 8. For example, if the overlap switch 8 is connected to any loads, which are already connected in the system, the load may be used as the important load 6. Or if an additional load and an overlap switch are connected at the interlinkage point, the additional load may be used as the important load 6.

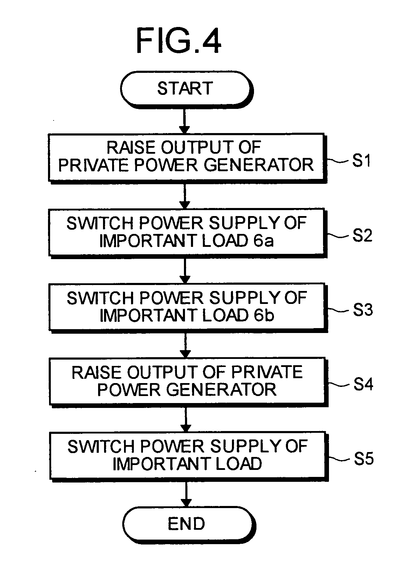

Moreover, in the stabilized-power supply system 100, it is possible to lower the capacity of the high-speed current-limiting breaker 4 as below. Fig. 4 is a flow chart of an operation for switching from the commercial power-system to the private power-generating system. For example, it is assumed here that the commercial power-system outputs 150 kilowatts, each important load 6a, 6b, and 6c needs 50 kilowatts, the capacity of the high-speed current-limiting breaker 4 is 100 kilowatts, and the private-power generator 2 does not output any power. When the private power-generator 2 is controlled to output 100 kilowatts (step S1), 50 kilowatts is enough as commercial power. Since the commercial power-system is connected to the important loads 6 via the overlap switch 8, 100 kilowatts is supplied to the high-speed current-limiting breaker 4 from the commercial power-system.

A process for supplying power to each important load 6 will be explained below. First, the commercial power-system needs to be switched to the private power-generating system to supply power to the important load 6a. When both the first and the second systems are connected to the overlap switch 8, power flowing in the private power-generating system is decided depending on a system impedance. Then the private power-generator 2 is controlled to supply power to the important load 6a by opening the circuit breaker 81 (step S2), 50 kilowatts is supplied to the important load 6a via the second system B. Moreover, 50 kilowatts as surplus power is supplied from the private power-generator 2 to the commercial power-system via the high-speed current-limiting breaker 4 and added to commercial power. This results in 100 kilowatts as commercial power.

Second, the commercial power-system needs to be switched to the private power generating-system to supply power to the important load 6b. When both the first and the second systems are connected to the overlap switch 8, the private power-generator 2 is controlled to supply power to the important load 6b by opening the circuit breaker 81 (step S3), 50 kilowatts is supplied to the important load 6a via the second system B. As a result, the private power-generator 2 supplies power that is flowed to the important load 6a and 6b, and has no surplus power for supplying to the high-speed current-limiting breaker 4. Thus, commercial power has the same magnitude as that of the initial commercial power.

Next, a case is explained when the commercial power-system needs to be switched to the private power-generating system to supply power to the important load 6c. If it is assumed that the private power-generator 2 is not controlled to raise an output, 50 kilowatts is flowed from the commercial power-system to the private power-generating system via the high-speed current-limiting breaker 4 when the overlap switch 8 connects the private power-generating system to the important load 6c. This power is smaller than the capacity of the high-speed current-limiting breaker 4, thereby to pass through the high-speed current-limiting breaker 4. However, if the important load 6c needs 150 kilowatts, excess of power is flowed to the high-speed current-limiting breaker 4. Therefore, the high-speed current-limiting breaker 4, which has the capacity enough to deal with excess of power, is required. This results in increase in the size and a cost of the high-speed current-limiting breaker 4.

In the present invention, when power is supplied to the important load 6c, the private power-generator 2 is controlled to raise power to 150 kilowatts (step S4). Then the commercial power-system is switched to the private power-generating system to supply power to the important load 6c (step S5).

Before the commercial power-system is switched to the private power-generating system, 50 kilowatts is flowed to the commercial power-system from the private power-generating system via the high-speed current-limiting breaker 4. After this switching, power is not flowed to the commercial power-system from the private power-generating system. Accordingly, even if the important load 6c needs 150 kilowatts, it enables lowering power flows about 100 kilowatts to 150 kilowatts at the high-speed current-limiting breaker 4 because the output of the private power-generator 2 is raised to 150 kilowatts to 250 kilowatts.

According to the present invention, the high-speed current-limiting breaker 4 does not necessarily have the capacity for all important loads, therefore, the high-speed current-limiting breaker 4 having a small capacity can be used. In the above explanation, the important loads 6a, 6b, and 6c are just as examples. If some additional important loads need to be connected, the same process as the above may be repeated by switching the first system A to the second system B.

The controller 9 controls the overlap switches 8. When the private power-generating system is switched to supply power to a plurality of important loads 6 step-by-step, these steps are determined based on a program in the controller 9. For example, these steps may be fixed, or determined corresponding to an amount of power generated by the private power-generator 2.

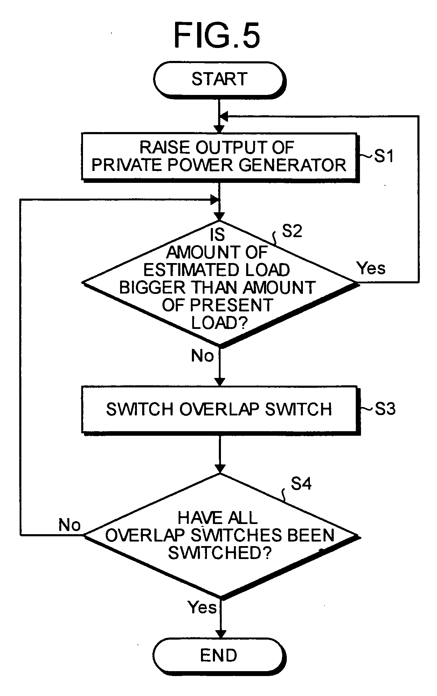

Fig. 5 is a generalization of the flow chart shown in Fig. 4. When the private power-generator 2 is controlled to raise the output to a predetermined value (step S1), the overlap switch 8 is connected to the important load 6. Then it is decided whether power flows is larger than the capacity of the high-speed current-limiting breaker 4 (step S2). Now, it is assumed that the private power-generating system supplies power to the important load 6 (for example, 6a and 6b), and then is going to supply power to the important load 6 (for example, 6c). In this state, an amount of whole present load represents a total amount of loads of the important load 6a and 6b. An amount of estimated load represents a total amount of loads of the important load 6a, 6b, and 6c. An amount of present output represents power generated by the private power-generator 2. The controller 9 compares the amount of whole present load with the amount of estimated load and the amount of present output. If a difference between the amount of estimated load and the amount of present output is larger than the capacity of the high-speed current-limiting breaker 4, it is decided that power flows, which is larger than the capacity, occurs. Therefore, the private power-generator 2 is controlled to raise the output to lower the difference, which is required to be smaller than the capacity (step S1-S2).

If power flows is smaller than the capacity, the private power-generator 2 is controlled to supply power to the important load 6 (step S3). In other words, if the difference between the amount of estimated load and the amount of present output is smaller than the capacity, the controller 9 switches the commercial power-system to the private power-generating system. These steps S1-S3 are repeated to supply power to all important loads 6 (step S4). In the above explanation, the private power-generator 2 is controlled to raise the output until the difference between the amount of estimated load and the amount of present output is just larger than the capacity. However, the private power-generator 2 may be also controlled to raise the output if the difference is within a margin. For example, if the margin is 90% to 110 % of the capacity, the private power-generator 2 is controlled to raise the output.

Thus, a high-speed current-limiting breaker having a small capacity may be used. More precisely, the high-speed current-limiting breaker, which has smaller capacity than total amount of the important loads 6 may be used. On the other hand, as shown in Fig. 4, if power is supplied to all important loads 6 simultaneously, the high-speed current-limiting breaker 4 is required to have a capacity of 150 kilowatts. Therefore, if the high-speed current-limiting breaker 4 has a capacity, which is larger than only the largest important load 6, it can be used. Because the difference between the amount of estimated load and the amount of present output is smaller than the capacity until power is supplied to each important load 6 according to these steps.

### Second Embodiment

In this stabilized-power supply system 100, the controller 9 can selectively switch the overlap switch 8 that is connected to the important load 6. Therefore, any loads, which are already connected to the overlap switch 8, may be used as the important load. In other words, the overlap switch 8 that is connected to the most important load 6 may be switched after the most important load (for example, 6a and 6b) is distinguished from other important load (for example, 6c and 6d).

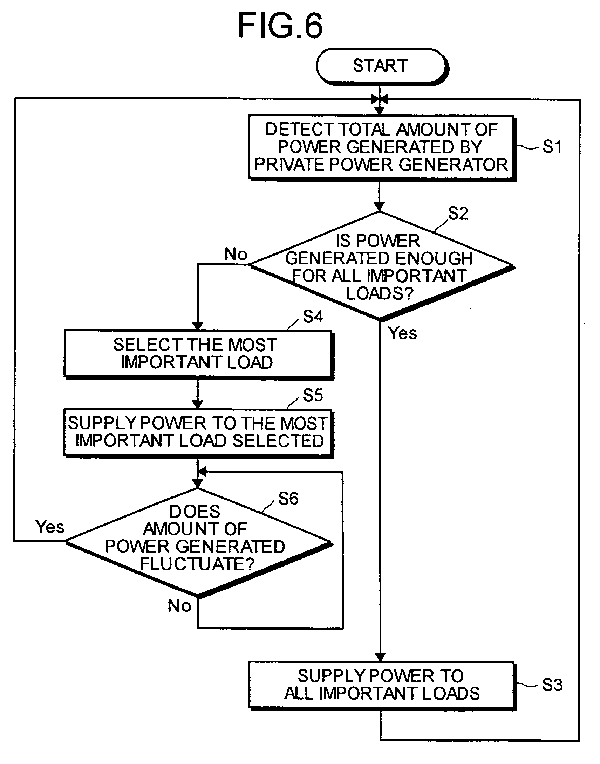

For example, if an amount of the output generated by the private power-generator 2 fluctuates due to such as maintenance, selecting the overlap switch 8 may be effective. If some private power-generators 2 stop supplying power, it becomes difficult to supply power to all important loads 6. Therefore, when the important load 6a and 6b are selected and given priority to supply the power, damage of the surge on these loads can be prevented. Fig. 6 is a flow chart of a process for supplying power to the most important load. First, the controller 9 detects total amount of power from the private power-generator 2 (step S1).

Then it is decided whether total amount of power is enough to supply power for all important loads 6 (step S2). If power is enough, the private power-generating system is controlled to supply power to all important loads 6 (step S3). On the other hand, if power is not enough, the most important load 6a and the most important load 6b are selected according to a process memorized in the controller 9 (step S4). In this process, predetermined loads or prioritized loads at this point may be selected.

The controller 9 switches the private power-generating system to supply power to the selected important load 6a and 6b by connecting the overlap switch 8a and 8b to these loads (step S5). On the other hand, the first system A provides power to the important load 6c and 6d, therefore, these loads might be easily damaged by the surge. The controller 9 monitors power fluctuation of the private power-generator 2 (step S6). If the output from the private power-generator 2 is fluctuated or another private power-generator 2 starts generating power after the maintenance, the controller 9 detects total amount of power again (step S1), and repeats the same steps S2-S6. Accordingly, damage of the surge on the most important load can be prevented by repeating these steps even if the amount of private power is not sufficient for all important loads.

### Third Embodiment

It is exampled above that the first system A is connected to the second system B via the synchronous controller 83. If the amount of an output from a private power-generator 2 drops due to such as failure or maintenance, total amount of the important load 6 becomes larger than the amount of the output. Therefore, an important load 6 that is selected optionally (preferably not the most important one), needs to be switched to the commercial power-system from the private power-generating system to avoid damage on all the important loads. For example, if the high-speed current-limiting breaker 4 is in an open state due to such as maintenance, the synchronous control on the first system A and the second system B is not provided. Therefore, the important load 6 needs to be switched to the commercial power-system from the private power-generating system after the synchronous controller 83 provides the synchronous control on both systems.

More precisely, the synchronous controller 83 provides the synchronous control on the first system A and the second system B. The controller 9 monitors the output from the private power-generator 2 and controls the synchronous controller 83. When the output drops, the synchronous controller 83, which is connected to a selected important load 6 (for example, the most important load), is controlled to provide the synchronous control on both systems. After the second system B is switched to the first system A by the overlap switch 8, the commercial power-system supplies power to the selected important load 6. Moreover, each important load 6 can be switched to the commercial power-system quickly, since the synchronous controller 83 is connected to each overlap switch 8. However, all the important loads 6 are not necessarily connected to the synchronous controller 83. For example, the synchronous controller 83 may be connected to the important load 6, which cannot withstand the surge or the power failure.

A synchronous controller may be connected at any places until the synchronous control is provided to each overlap switch 8. For example, some important loads 6 may be selected to form a group. The synchronous controller may be connected to each overlap switch 8 that is connected to the important loads 6 in the group. As a result, the private power-generating system can be switched to the commercial power-system quickly to supply power to the important loads 6 in the group.

The high-speed current-limiting breaker 4 may be replaced with an ordinary breaker to lower the cost. However, a high-speed current-limiting breaker enables avoiding the surge. The present invention allows use of a high-speed current-limiting breaker having lower capacity, so that the cost can be reduced. Irrespective of whether an ordinary breaker is used or a high-speed current-limiting breaker, the present invention allows switching of the power system without breaking the power supply.

According to the present invention, it is possible to prevent the important load from being damaged due to the surge. When the overlap switch 8 is switched step-by-step corresponding to the amount of power generated by the private power-generator 2, the capacity of the high-speed current-limiting breaker 4 can be reduced. This results in lowering the cost of the high-speed current-limiting breaker 4.

Moreover, the most important load is prevented from being damaged due to the surge.

### INDUSTRIAL APPLICABILITY

As described above, a stabilized-power supply system, a method of operating the stabilized-power supply system, and a computer program according to the present invention are useful for supplying stabilized power to an important load that cannot withstand a surge, and are suitable for reducing cost thereof.

## Claims

1. A stabilized-power supply system comprising:
a commercial power-system that supplies power to a general load;
a private power-supply system that has a private power generator and supplies power to a plurality of important loads;
an interlinking system that has an interrupting unit and that interlinks the commercial power-supply system and the private power-generating system;
a commercial power-supply system that supplies power in the commercial power-system to each of the important loads; and
an overlap switch corresponding to each important load to connect either of the commercial power-supply system and the private power-generating system to a corresponding important load.

2. The stabilized-power supply system according to claim 1, wherein the interrupting unit is a high-speed current-limiting breaker.

3. The stabilized-power supply system according to claim 1 or 2, further comprising:
a controlling unit that monitors output of the private power generator, and controls switching of the overlap switches based on the output monitored.

4. The stabilized-power supply system according to claim 1 or 2, further comprising:
a controlling unit that monitors a present output of the private power generator and controls output of the private power generator in such a manner that a difference between the present output and an estimated load that is a total of loads of the important loads already connected to the private power generator and that are going to be connected to the private power generator due to switching of the overlap switches does not exceed a capacity of the interrupting unit.

5. The stabilized-power supply system according to claim 1 or 2, further comprising:
a controlling unit that controls switching of a predetermined one or more of the overlap switches.

6. The stabilized-power supply system according to claim 1 or 2, wherein a capacity of the interrupting unit is smaller than a total of loads of the important loads.

7. The stabilized-power supply system according to claim 1 or 2, wherein the overlap switch includes a circuit breaker that is connected to the commercial power-system, and a circuit breaker that is connected to the private power-generating system.

8. The stabilized-power supply system according to claim 7, further comprising:
a synchronization controlling unit that provides a synchronous control on the commercial power-system and the private power-generating system.

9. A method of operating a stabilized-power supply system, comprising:
constructing the stabilized-power supply system that includes a commercial power-system that supplies power to a general load; a private power-supply system that has a private power generator and supplies power to a plurality of important loads; an interlinking system that has an interrupting unit and that interlinks the commercial power-supply system and the private power-generating system; a commercial power-supply system that supplies power in the commercial power-system to each of the important loads; and an overlap switch corresponding to each important load to connect either of the commercial power-supply system and the private power-generating system to a corresponding important load;
supplying power from the commercial power-supply system to a desired one of the important loads by switching an overlap switch corresponding to the desired one of the important loads; and
operating the private power-generating system while the commercial power-system is interlinked with the private power-generating system via the interrupting unit.

10. A method of operating a stabilized-power supply system, comprising:
constructing the stabilized-power supply system that includes a commercial power-system that supplies power to a general load; a private power-supply system that has a private power generator and supplies power to a plurality of important loads; an interlinking system that has an interrupting unit and that interlinks the commercial power-supply system and the private power-generating system; a commercial power-supply system that supplies power in the commercial power-system to each of the important loads; and an overlap switch corresponding to each important load to connect either of the commercial power-supply system and the private power-generating system to a corresponding important load;
a first switching of switching, based on output of the private power generator, an overlap switch corresponding to the desired one of the important loads so that power is supplied to the desired one of the important loads from the private power-generating system;
a second switching of switching, when there is an increase in the output of the private power generator, an overlap switch corresponding to an important load other that the desired one of the important loads so that power is supplied to the important load other that the desired one of the important loads from the private power-generating system;
repeating the second switching based on the increase in the output of the private power generator; and
operating the private power-generating system while the commercial power-system is interlinked with the private power-generating system via the interrupting unit.

11. A method of operating a stabilized-power supply system, comprising:
constructing the stabilized-power supply system that includes a commercial power-system that supplies power to a general load; a private power-supply system that has a private power generator and supplies power to a plurality of important loads; an interlinking system that has an interrupting unit and that interlinks the commercial power-supply system and the private power-generating system; a commercial power-supply system that supplies power in the commercial power-system to each of the important loads; and an overlap switch corresponding to each important load to connect either of the commercial power-supply system and the private power-generating system to a corresponding important load;
deciding an important load out of the important loads as a most important load;
a first switching of switching, based on output of the private power generator, an overlap switch corresponding to the most important load so that power is supplied to the most important load from the private power-generating system;
a second switching of switching, when there is an increase in the output of the private power generator, an overlap switch corresponding to an important load other that the most important load so that power is supplied to the important load other that the most important load from the private power-generating system;
repeating the second switching based on the increase in the output of the private power generator; and
operating the private power-generating system while the commercial power-system is interlinked with the private power-generating system via the interrupting unit.

12. The method according to claim 10 or 11, wherein the second switching is performed when a difference between a present output of the private power generator and an estimated load that is a total of loads of the important loads already connected to the private power generator and that are going to be connected to the private power generator due to switching of the overlap switches does not exceed a capacity of the interrupting unit.

13. A method according to claim 10 or 11, further comprising switching the overlap switches in synchronization when shifting power supply from the private power-generating system to the commercial power-system.

14. A computer program that makes a computer realize a method of operating a stabilized-power supply system, the stabilized-power supply system including a commercial power-system that supplies power to a general load; a private power-supply system that has a private power generator and supplies power to a plurality of important loads; an interlinking system that has an interrupting unit and that interlinks the commercial power-supply system and the private power-generating system; a commercial power-supply system that supplies power in the commercial power-system to each of the important loads; and an overlap switch corresponding to each important load to connect either of the commercial power-supply system and the private power-generating system to a corresponding important load, the computer program making the computer realize:
supplying power from the commercial power-supply system to a desired one of the important loads by switching an overlap switch corresponding to the desired one of the important loads; and
operating the private power-generating system while the commercial power-system is interlinked with the private power-generating system via the interrupting unit.
